# EUROPEAN PATENT APPLICATION

(11) **EP 4 841 312 A1**
(43) Date of publication of application: **18.11.2026**
(21) Application number: 26172605.3
(22) Date of filing: 15.04.2026
(51) Int. Cl.: G01V 3/10, G01V 3/08

(54) **APPARATUS AND METHOD FOR CONTAMINANT DETECTION**

(30) Priority: 16.05.2025 GB 202507593
(71) Applicant: Illinois Tool Works Inc., Glenview IL 60025 (US)
(72) Inventor: PHILLIPS, David, Glenview, 60025 (US); MASEK, Vladimir, Glenview, 60025 (US); SAVAGE-DICKSON, Patrick, Glenview, 60025 (US)
(74) Representative: HGF

(57) **Abstract**

Embodiments of the present invention provide a metal detector (100) for detecting metal contaminant in a product, the metal detector (100) comprising a transmit signal generator (210) arranged to provide an electrical drive signal (215) having at least two frequency components to at least one transmit coil (310), at least one detector coil (312, 313) arranged to output a detector signal (314) in dependence on a magnetic field from the at least one transmit coil (310), at least two phase sensitive devices (441, 442) arranged to receive the detector signal and a respective reference signal (223, 224) having a frequency and phase related to a respective frequency component of the drive signal for minimising a product component of the detector signal, an amplifier (441, 442) for amplifying an output signal of each of the at least two phase sensitive devices (441, 442) to provide amplified output signals, and a detector (470) arranged to detect a presence of the contaminant in the product in dependence on the amplified output signals.

## Description

The present invention relates to methods and apparatus for detecting contaminants, in particular contaminants in food products. More specifically, although not exclusively, the present inventions relates to detecting metal contaminants.

### Background

Detecting contaminants such as metal in products, particularly food products, is important to reduce customer complaints. It is known to use a metal detector with a detector head located adjacent to a line along which products pass. The detector head comprises a coil system including a transmitter coil for receiving an electrical drive signal and generating a magnetic field through which the products pass. Two receiver coils are arranged a distance from the transmitter coil to receive the same signal and to produce identical output voltages. The receiver coils are connected in opposition so that their output voltages oppose each other to result in a zero output signal when the coil system is balanced.

When a food product containing a contaminant passes through the coil system, the balanced opposition of output signals from the coils is disrupted due to an influence of the contaminant. Induced currents in the particle's surface results in a non-zero output signal from the receiver coils. The signal output from the receiver coils can be divided into resistive and reactive components in dependence on a conductivity and magnetic permeability of the contaminant e.g. metal particle. It will be appreciated that the resistive and reactive components are 90° out of phase. A non-ferrous but conductive material such as copper will generate a largely 'resistive' signal from the receiver coils generally in-phase with the drive signal, whereas a poor conductor such as a ferrite material will cause a signal in phase quadrature to the drive signal. For materials with some magnetic effect and some electrical conductivity, the signal has both a resistive and a reactive component and the signal lies between the in-phase and quadrature components . This effect allows a discrimination of particles of different types which pass through the detector.

A metal particle present in a food product may create a very small disturbance in a magnetic field, such as 1 in 10 million disturbance in the magnetic field. Therefore high sensitivity is required. However, the food product itself creates a disturbance in the magnetic field and, depending on properties of the food product such as its electrical conductivity e.g. caused by moisture, it may itself be interpreted as a metal particle. It is therefore desired to obtain high sensitivity for metal contaminants, but whilst avoiding false detections from food products.

It is an object of embodiments of the invention to at least mitigate one or more of the problems of the prior art.

### Brief Description of the Drawings

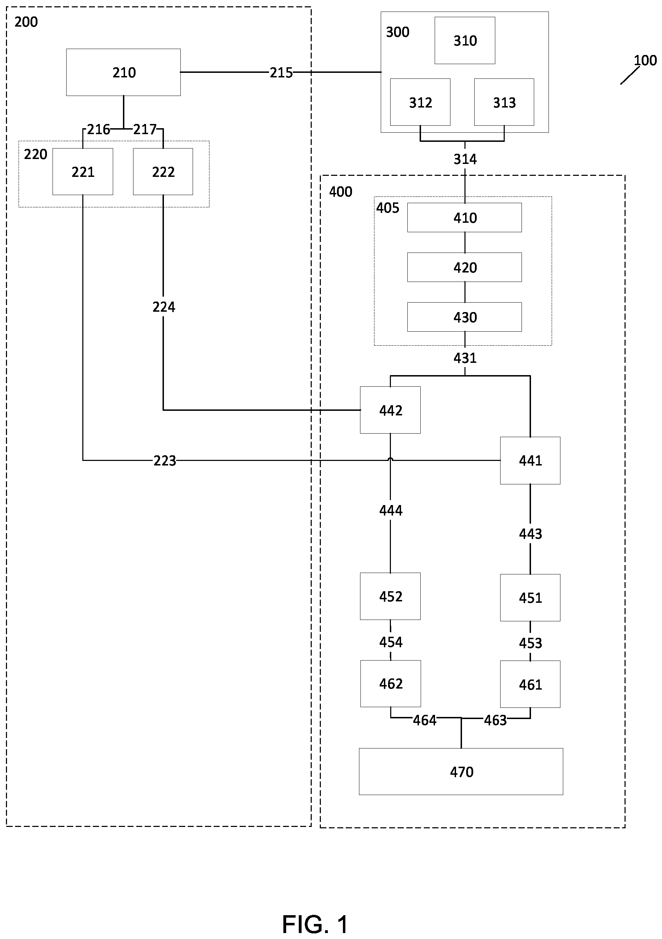

Embodiments of the invention will now be described by way of example only, with reference to the accompanying figures, in which Figure 1 shows an apparatus according to an embodiment of the invention.

### Detailed Description of Embodiments of the Invention

Figure 1 illustrates an apparatus according to an embodiment of the invention. The apparatus, generally denoted as 100, comprises a transmitter 200, a detector head 300 and a receiver 400.

The transmitter 200 comprises a transmit signal generator 210 which provides an electrical drive signal 215 for at least one transmit coil 310 of the detector head 300. In the illustrated embodiment 100 there is one transmit coil 310, although it will be realised that there may be two or more coils 310. The drive signal 215 comprises at least two drive signal components. Each drive signal component has a respective frequency which is different from a frequency of the other drive signal component(s). In the described example, the drive signal 215 comprises at least two drive signal components i.e. first and second drive signals each having a respective frequency, which will be referred as a low frequency component and a high frequency component. It will be understood that low and high are with respect to the other signal component i.e. the high frequency component has a higher frequency than the other, low frequency, component.

The drive signal 215 provided from the transmit signal generator 210 is a composite signal comprising the first and second, or low and high frequency, drive signals. The drive signal 215 is provided to the transmit coil 310 of the detector head 300 so that the transmit coil 310 outputs a magnetic field corresponding to the drive signal 215. In some embodiments the drive signal 215 is a square wave having a frequency which may be selected according to an input to the transmit signal generator 210. As can be appreciated, a square wave signal comprises a fundamental signal at a frequency of the square wave and a number of higher frequency harmonic signals. In this way, the square wave drive signal 215 comprises a low frequency fundamental, or primary, drive signal corresponding to the low frequency drive signal and at least one higher frequency harmonic signal. Embodiments of the present invention use a third-order harmonic of the square wave drive signal 215 as the high frequency drive signal, although it will be appreciated that other harmonics of the square wave e.g. fifth harmonic may be used. As a result, the transmit coil 310 is driven to generate a magnetic field with at least two different frequencies of excitation e.g. at least the fundamental and third harmonic frequencies of the square wave drive signal 215. A frequency of the square wave and therefore also the fundamental low frequency drive signal may be in the range 30-400kHz, although other frequencies may be chosen. In one embodiment the square wave drive signal may have a frequency of around 31kHz. In some embodiments a plurality of predetermined frequencies e.g. 10, 20, 30, 40 or 50 (other numbers of predetermined frequencies may be used) may be stored and a frequency of the drive signal chosen from amongst those predetermined frequencies, such as during a calibrate or learn process of the apparatus 100. The predetermined frequencies may be selected, such as prior to a manufacture of the apparatus 100, to provide for suitability of the apparatus with difference types of product e.g. products packaged in a metallized film e.g. PET film, meat products, ready meal type products etc. A drive signal frequency may be selected in use of the apparatus, such as according to the product type.

The apparatus 100 comprises a delay unit 220. The delay unit 220 is arranged to provide a time-delayed signal corresponding to each frequency of the drive signal 215. In the illustrated embodiment the delay unit 220 comprises a plurality of delay modules 221, 222. Each delay module 221, 222 is arranged to receive a respective input signal 216, 217 and to output a time-delayed version 223, 224 of the input signal. The input signal to each delay module 221, 222 is provided by the transmit signal generator 210. The transmit signal generator 210 is arranged to output a first or low frequency signal 216 to a first delay module 221 and a second or high frequency delay signal 217 to a second delay module 222. The low frequency signal 216 is at a fundamental frequency of the drive signal 215 e.g. 31kHz. The high frequency signal 217 is at a frequency of the higher frequency harmonic signal e.g. the third-order harmonic of the drive signal 215. The low frequency signal and the high frequency signal 217 may be square wave signals at the respective frequencies. It will be appreciated that the delay unit 220 may comprise further delay modules arranged to receive respective harmonic signals.

Each of the delay modules 221, 222 is arranged to apply a respective time delay to the respective received signal 216, 217. The delay applied to each signal 216, 217 may be different from that applied to other signal(s). A first delay is applied to the low frequency signal 216 to generate a delayed low frequency signal 223 and a second delay is applied to the high frequency signal 217 to generate a delayed high frequency signal 224. The application of the respective time delay to each signal has the effect of rotating a phase of the signal i.e. to rotate the low frequency signal 216 and to rotate a phase the high frequency signal 217 each by an angle corresponding to a duration of the time delay as will be appreciated. In other words, the delayed low frequency signal 223 is a time-delayed version of the low frequency square wave signal 216 and the delayed high frequency signal 224 is a time-delayed version of the high frequency square wave signal 217.

As noted above, depending on a nature or composition of a product passing near the detector head 300 and a frequency of the drive signal 215, a signal from the receiver coils 312, 313 has a phase difference or change with respect to the drive signal 215 e.g. varying from in-phase (0° delay) to quadrature (90° delay). The delay applied by each delay module 221, 222 is determined to cause the corresponding received or 'product' signal to align with the corresponding transmitted component in the presence of an uncontaminated product, such as to lie on the horizontal (resistive) axis. Since the delay phase at the fundamental frequency e.g. 31kHz may be different from that the third-harmonic frequency e.g. 93kHz, the low frequency delay module 216 may be arranged to apply a different delay to the high frequency delay module 217. The magnitude i.e. duration of delay applied by each module 216, 217 may be determined during a calibrate or learn process of the apparatus 100 using samples of the product which the apparatus 100 will be used to determine contamination of e.g. so the delay is appropriate to the composition, such as water content, or the particular product. The calibrate or learn process of the apparatus is further described below.

The delay applied to each signal 216, 217 may be partly selected to delay a phase of the respective signal 216, 217 to match a delay introduced into corresponding received signals by the detector head 300 and the receiver 400, such that the phase of the signals is substantially the same. The delay of the received signal within the receiver 400 and those signals 223, 224 output by the delay unit 220 may be the same at a predetermined point within the receiver 400, as will be explained. The delays may be determined experimentally or from simulations, for example. When the magnetic field interacts with the product, there is a small time delay in the electronic system. The delay may be due to interaction of the changing magnetic field with the receiver coils 312, 313 and subsequent detection and processing of the electrical signals in the electronics of the receiver 400. Advantageously by introducing a delay corresponding to that of the receiver 400, the phase of the signals from the transmitter 200 and those within the receiver 400 are substantially the same thereby allowing minimisation or removal of a product signal within the receiver 400 to improve detection of contaminants as will be explained.

The delayed low frequency signal 223 and the delayed high frequency signal 224 each may be square wave signals arranged to select corresponding portions of a received signal 314 as will be explained.

As noted above, the detector head 300 comprises the transmit coil 310 and at least one detector or receiver coil 312, 313. In the illustrated embodiment the detector head 300 comprises two detector coils 312, 313. The detector head 300 may be arranged in use proximal to a product to be tested or inspected, such as proximal to a path along which food products are conveyed past the detector head 300. A first detector coil e.g. coil 312 may be arranged in a first position and a second detector coil 313 may be arranged in a second position. The first position may be referred to as a top position and the second position a bottom position, where it will be appreciated that top and bottom are with respect to a product to be inspected or to an arrangement of the detector head in an in use orientation. Each detector coil 312, 313 is arranged to output an electrical signal corresponding to a received magnetic field. The wiring of each detector coil 312, 313 may be arranged in relation to the wiring of the other coil such that, in the absence of a product, the output signals cancel each other out i.e. result in a zero net detector signal 314.

It will be appreciated that magnetic field received by each coil 312, 313 corresponds to the transmitted magnetic field after interaction with the product, and thus modified by, the product and any contaminants present. The detector coils 312, 313 are arranged in opposed relation so that their respective electrical signals corresponding to an undisturbed magnetic field cancel to result in a zero detector signal 314. However when the magnetic field is disturbed by an object, such as the product whether contaminated or uncontaminated, a non-zero signal is output from the detector head 300 as the detector signal 314 to be received by the receiver 400.

The receiver 400 comprises a pre-processing block 405 which is arranged to receive the detector signal 314 from the detector head 300. The pre-processing block 405 is arranged to pre-process the detector signal 314. In the embodiment illustrated in Figure 1 the pre-processing block 405 comprises an input inductor 410, a filter block 420 and an amplifier 430. The filter block 420 may comprise a low-pass filter (LPF) arranged to filter out high frequency components of the detector signal 314. The LPF 420 may be arranged to have a cut off frequency at, or just above, a highest frequency signal used by the receiver 400 such as the third harmonic signal. In some embodiments the filter 420 is a variable frequency response filter 420 whose frequency response may be controlled or selected from one of a plurality of predetermined filter response functions. The amplifier may be an RF amplifier 430 for amplifying RF frequency signals and providing an amplified RF signal 431. In some embodiments the amplifier 430 may be a variable gain amplifier430. The variable gain amplifier may have a gain which is selected from one of a plurality of predetermined gain values, such as low, medium and high as an example.

The receiver 400 comprises at least one phase sensitive device, PSD, or lock-in amplifier or detector (LIA, LID) 441, 442. A PSD441, 442 may be a phase comparator or phase detector, where each PSD 441, 442 is arranged to output a signal indicative of a phase angle between first and second input signals. Each PSD 441, 442 may be a balanced demodulator/modulator configured as a PSD or phase detector, as will be appreciated by the skilled person. The LIA as will be appreciated is an of amplifier that can extract a signal with a known carrier wave based on a reference signal provided to the LIA.

The receiver 400 may comprise a respective PSD 441, 442 for each frequency signal processed by the receiver 400. In the illustrated embodiment the receiver 400 comprises two e.g. first and second PSDs 441, 442for processing, respectively, first and second signals. The first PSD 441 is arranged as a low frequency PSD 441 and the second PSD is arranged as a high frequency PSD 442 i.e. to operate on low and high frequency signals, respectively. As discussed above, the low frequency received signal may correspond to the fundamental signal of the drive signal 215 and the high frequency received signal may correspond to a high-order harmonic signal, such as the third harmonic of the square wave drive signal215. In an example embodiment the low frequency signal may have a frequency of 31kHz and the high frequency signal a frequency of 93 kHz, although it will be realised that other frequencies may be used as described above and that, furthermore, there may be more than two PSDs 441, 442. As explained above, when the detector head 300 is proximal to the product, each received signal is subject to a respective delay which rotates a phase of the signal with respect to the transmitted signal i.e. corresponding to the drive signal 215.

The first and second PSDs 441, 442 are arranged to receive the signal 431 output from the pre-processing block 405 which originates from the detector signal 314. The signal 431 may be a filtered and RF amplified version of the detector signal431. Each of the PSDs 441, 442 is arranged to receive a respective time delayed signal 223, 224 from the delay unit 220 as a respective reference signal. The first PSD 441 is arranged to receive a first time delayed signal 223 and the second PSD 442 is arranged to receive a second time delayed signal 224. The first time delayed signal 223 may be the delayed low frequency signal 223 as a low frequency reference signal and the second time delayed signal 224 may be the delayed high frequency signal 224 as a high frequency reference signal. The first and second time delayed signals 223, 224 act as first and second channel selection signals 223, 234 to select a portion of the received signal corresponding to each time delayed signal i.e. the received fundamental frequency and higher frequency signals that have interacted with the product, as will be explained.

The first PSD 441 is arranged to receive the first channel selection signal 223. The second PSD 442 is arranged to receive the second channel selection signal 224. As discussed above, the first channel selection signal 223 is based upon the fundamental harmonic signal and the second channel selection signal 224 is based upon the third harmonic signal of the drive signal 215. Each PSD 441, 442 is arranged to discriminate or reject signals which are of different frequency and phase to the corresponding select signal 223, 224. When the signals input to each PSD 441, 442 are of the same frequency, an output of the respective PSD 441, 442 is indicative of a phase difference between the input signals. The PSDs 441, 442 each provide an output 443, 444 signal which is indicative of the phase difference of signals received at both of its inputs. In some embodiments, an output of a respective PSD e.g. 441 or 442 is indicative of a predetermined trigonometric function applied to a phase difference between its input signals, such as a cosine function. In this case, first and second signals having a 0° phase difference provide a value 1 which causes the output signal to be proportional to an input signal amplitude. If the first and second signals have quadrate phase i.e. 90° phase difference, then the cosine value provided is 0 which results in an output signal of 0 magnitude, with phase differences in between having appropriate intermediate magnitudes.

The calibrate or learn process of the apparatus 100 comprises, in some embodiments, the following blocks: a) a low frequency block, where both PSDs 441, 442 are operative i.e. provided with reference signals at the low frequency, e.g. fundamental frequency, and one PSD e.g. PSD 441 is quadrature to the other e.g. PSD 442. This allows measurement of the low frequency phase (i.e. the rotation needed to move all the product signal on to one channel at the low frequency); b) a high frequency block where both PSDs 441, 442 are at the high frequency e.g. third harmonic frequency and one PSD e.g. PSD 441 is quadrature to the other e.g. PSD 442. This allows measurement of the high frequency phase of the product (i.e. the rotation needed to move all the product signal on to one channel at the high frequency); c) a setting block where one PSD channel 223 is set to low frequency and the second PSD channel 224 is set to high frequency. In this configuration there is no relationship between the channels from a phase point of view. The low frequency channel 223 has a phase delay introduced in the delay block 220 that means the product signal is minimised or substantially removed and the high frequency channel 224 has a phase delay introduced in the delay block 220 that means the product signal is minimised or substantially removed i.e. the product signal is removed from both channels at the respective frequencies. By product signal it is meant the signal originating from an uncontaminated product.

In the illustrated embodiment, the first PSD 441 compares the received signal 431 and the first channel selection signal 223 corresponding to the fundamental harmonic signal to provide a low frequency output signal 443. A maximum value output signal 443 (corresponding to the fundamental harmonic of the signal 431) is produced when the two signals 431, 223 are of the same frequency and phase (since Cosine 0°=1), whereas when the signals are quadrature and thus out of phase substantially zero output signal is produced (since Cosine 90°=0). The maximum value is proportional to the amplitude of the received signal 431.

The second PSD 442 compares the received signal431 and the second channel selection signal 224 corresponding to the high-order harmonic signal e.g. third order harmonic to provide a high frequency output signal 444. A maximum value output signal 444 (corresponding to the fundamental harmonic of the signal 431) is produced when the two signals 431, 224 are of the same frequency and phase (since Cosine 0°=1), whereas when the signals are quadrature and thus out of phase substantially zero output signal is produced (since Cosine 90°=0).

As noted above, the first and second channel selection signals 223, 224 are arranged to each have a respective phase delay applied via block 220 as determined in the calibrate or learn process in dependence on the composition of the product to be inspected.

As a result, when an uncontaminated product passes through the apparatus i.e. proximal to the detector head 300, the low and high frequency components of the received signal 431 are cancelled with the respective selection signals 223, 224 by the respective PSD 441, 442 and therefore provide a zero output signal as signals 443, 444. However, in the presence of a contaminated product e.g. with a metal contaminant within the product, the output signal 443, 444 is non-zero and the presence of the contaminant within the product is detected.

The receiver 400 comprises first and second amplifiers 451, 452, (low and high frequency) which are each arranged to receive a respective one of the signals 443, 444 output from the PSDs 441, 442. The first amplifier 451 is associated with the first or low frequency PSD 441 to amplify the output signal 443. The second amplifier 452 is associated with the second or high frequency PSD 442 to amplify the output signal 444. When the product is uncontaminated, since there is substantially no amplitude to the output signals 443, 444, the amplified output signals 453, 454 are also substantially zero. However, when the product is contaminated, the amplifiers 451, 452 operate to amplify the output signals 443, 444 resulting from the phase differences and to output amplified signals 453, 454.

Due to the use of the PSDs 441, 442 to minimise, particularly to null or cancel out the uncontaminated product signal431, an amplification factor or magnitude of the amplification of the first and second amplifiers 451, 452 may be increased relative to an amplifier which, in use, amplifies a non-zero product signal for an uncontaminated product. When the product signals are not minimised by the phase sensitive devices 441, 442, an amplification factor of an amplifier must be limited e.g. in order to prevent saturation, whereas in embodiments of the invention by minimising the uncontaminated product signals with the PSDs 441, 442 a greater amplification factor maybe applied which advantageously increases detection of contaminated products. In other words, due to the cancellation of the received signal 431 generated for an uncontaminated product, an increased amplification may be applied to produce a larger signal for a contaminated product. Advantageously the PSDs 441, 443 operate to null the signal of an uncontaminated product and therefore allow higher amplification to be applied which generates a signal having a larger amplitude for a contaminated product.

The apparatus 100 comprises a further processing block 461, 462 for each signal i.e. first processing block 461 and second processing block 462, although it will be realised that the processing blocks 461, 462 may be combined. The processing blocks 461, 462 may each comprise an analogue-to-digital conversion (ADC) block 461, 462 which are each arranged to output a digital value 463, 464 corresponding to an amplitude of the respective signal 453, 454.

The apparatus 100 comprises a processing block 470 which is arranged to process the received signals 463, 464 i.e. the digital values corresponding thereto to detect the presence of the contaminant in the product. As such the processing block 470 may be referred to as a detector 470. The detector 470 is arranged to receive the digital values 463, 464 from the ADC blocks 461, 462. The digital values comprise a first or low frequency value 463 corresponding to the amplified low frequency signal 453 and a second or high frequency value 464 corresponding to the amplified high frequency signal 454. Since the signals 443, 444 are time variant the ADC blocks 461, 462 sample the signals at a predetermined frequency e.g. at frequency which is at least twice the frequency of the third harmonic. The detector 470 processes the digital values as signals 463, 464.

The detector 470 is arranged to perform processing on the signals 463, 464 to determine whether the product is contaminated. As the uncontaminated product signal is minimised or substantially removed by the PSDs 441, 442, the detector is arranged to apply a predetermined threshold to the signals 463, 464 as will be explained.

In some embodiments, the detector 470 is arranged to apply a filter to the signals 463, 464. The filter may be applied in software e.g. as a digital filter to remove noise from the signals 463, 464.

In some embodiments, the detector 470 is arranged to combine the signals 463, 464. In some embodiments the combining may comprise determining a fundamental signal by subtracting a signal of one or more harmonic signals. In one embodiment the detector 470 is arranged to subtract the high frequency signal 464, which may correspond to the third harmonic, from the low frequency signal 463 which may correspond to the fundamental frequency. That is, a value of the high frequency signal 464 is subtracted from the low frequency signal 463 to create a resultant low frequency signal. In some embodiments the detector may apply a resultant filter to at least one of the signals 463, 464. The resultant filter may be applied to the resultant low frequency signal. In some embodiments the detector block may then perform addition or summation on the two signals i.e. the filtered resultant signal and the high frequency signal e.g. the third harmonic signal.

In order to detect the contaminant in the product the detector 470 is arranged to apply a detection threshold to the summed signal. The detector is arranged to determine if a magnitude or amplitude of the summed signal exceeds the detection threshold then the product is determined to contain a contaminant. In some embodiments, the detector 470 may require the magnitude or amplitude of the summed signal to exceed the threshold for a predetermined period or time or number of samples for the presence of the contaminant to be confirmed.

Advantageously embodiments of the present invention improve detection of contaminants in products by minimising the uncontaminated product signal such that greater amplification can be applied to a detection signal than would otherwise be possible due to limitations of processing e.g. signal saturation etc.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A method of operation of a metal detector for detecting metal contaminant in a product, comprising:
generating a drive signal for a transmit coil, the drive signal comprising at least two frequency components;
receiving a detector signal from at least one detector coil and providing the detector signal to each of at least two phase sensitive devices;
providing a respective reference signal to each phase sensitive device, wherein each respective reference signal has a frequency and phase related to a respective frequency component of the drive signal for minimising a product component of the detector signal;
amplifying an output signal of each of the at least two phase sensitive devices to provide amplified output signals; and
detecting a presence of the contaminant in the product in dependence on the amplified output signals.

2. The method of claim 1, wherein the metal detector comprises first and second phase sensitive devices and the method comprises:
providing a first reference signal having a first frequency and a first phase to the first phase sensitive device, wherein the first phase sensitive device is arranged to minimise the product component of the detector signal at the first frequency and to output a first output signal; and
providing a second reference signal having a second frequency and a second phase to the second phase sensitive device, wherein the second phase sensitive device is arranged to minimise the product component of the detector signal at the second frequency and to output a first output signal.

3. The method of claim 1, wherein the first and second phases are determined during a calibration operation of the metal detector.

4. The method of claim 2 or 3, wherein amplifying the output signal of each of the at least two phase sensitive devices to provide an amplified output signal comprises amplifying the first output signal according to a first amplification factor and amplifying the second output signal according to a second amplification factor.

5. The method of any preceding claim, wherein detecting the presence of the contaminant in the product in dependence on the amplified output signal comprises applying a predetermined detection threshold to at least one amplified output signal.

6. A metal detector for detecting metal contaminant in a product, the metal detector comprising:
a transmit signal generator arranged to provide an electrical drive signal having at least two frequency components to at least one transmit coil;
at least one detector coil arranged to output a detector signal in dependence on a magnetic field from the at least one transmit coil;
at least two phase sensitive devices arranged to receive the detector signal and a respective reference signal having a frequency and phase related to a respective frequency component of the drive signal for minimising a product component of the detector signal;
an amplifier for amplifying an output signal of each of the at least two phase sensitive devices to provide amplified output signals; and
a detector arranged to detect a presence of the contaminant in the product in dependence on the amplified output signals.

7. The metal detector of claim 6, comprising:
a delay unit arranged to:
receive the electrical drive signal and to generate in dependence thereon a first reference signal having a first frequency and a first phase to a first phase sensitive device of the at least two phase sensitive devices, wherein the first phase sensitive device is arranged to minimise the product component of the detector signal at the first frequency and to output a first output signal; and
receive the electrical drive signal and to generate in dependence thereon a second reference signal having a second frequency and a second phase to the second phase sensitive device of the at least two phase sensitive devices, wherein the second phase sensitive device is arranged to minimise the product component of the detector signal at the second frequency and to output a first output signal.

8. The metal detector of claim 7, comprising
first and second amplifiers, wherein the first amplifier is arranged to amplify the first output signal according to a first amplification factor and the second amplifier is arranged to amplify the second output signal according to a second amplification factor.

9. The metal detector of any of claims 7 or 8, wherein the detector is arranged to combine the first and second output signals or signals determined in dependence thereon to detect the presence of the contaminant in the product.

10. The metal detector of any of claims 1 to 9, wherein the phase of each respective reference signal is determined in dependence on one or more characteristics of the product to minimising the product component of the detector signal one or more of the at least two frequency components of the drive signal.

11. Computer software which, when executed, is arranged to perform a method according to any of claims 1 to 5.
